# EUROPÄISCHE PATENTSCHRIFT

(11) **EP 2 177 407 B1**
(45) Veröffentlichungstag und Bekanntmachung des Hinweises auf die Patenterteilung: **15.08.2012**
(21) Anmeldenummer: 09168379.7
(22) Anmeldetag: 21.08.2009
(51) Int. Cl.: B60S 1/38

(54) **Anschlusselement zum gelenkigen Verbinden eines Wischblatts mit einem Wischarm**
Connection element for articulated connection of a wiper blade with a wiper arm
Elément de raccordement pour la liaison articulée d'une lame d'essuyage à un bras d'essuye-glace

(30) Priorität: 14.10.2008 DE 102008042842
(43) Veröffentlichungstag der Anmeldung: 21.04.2010
(73) Patentinhaber: Robert Bosch GmbH, 70442 Stuttgart (DE)
(72) Erfinder: Op't Roodt, Inigo, 3500 Hasselt (BE); De Block, Peter, 3545 Halen (BE)

(56) Entgegenhaltungen:
- DE-A1- 10 036 115
- DE-U1-202008 011 314
- FR-A1- 2 854 852
- JP-A- 9 221 005
- US-A1- 2008 222 829

## Beschreibung

### Stand der Technik

Die Erfindung geht von einem Anschlusselement nach dem Oberbegriff des Anspruchs 1 aus.

Aus der WO 2005/108 176 ist ein Wischblatt bekannt, das einen Wischleistenträger aus Kunststoff besitzt, an dem Halteschienen für die Wischleiste an einer Seite angeformt sind, während auf der anderen Seite ein Spoilerprofil vorgesehen ist. Zwischen diesen und den Halteschienen befindet sich ein Längskanal, in dem als Tragelement eine Federschiene untergebracht ist. Im mittleren Bereich des Wischblatts ist aus dem Spoilerprofil ein Fenster ausgeschnitten, um ein Anschlusselement am Träger bzw. am Tragelement zu befestigen.

Das Anschlusselement besitzt einen in Längsrichtung verlaufenden Mittelsteg und ist in Längsrichtung in einer Längsmittelebene geteilt. Jedes Teil des Anschlusselements besitzt zum Träger hin ein Führungsprofil mit einem u-förmigen Querschnitt, das den Träger seitlich umfasst. In montiertem Zustand liegen die Teile im Bereich des Stegs aneinander und werden durch ein Befestigungselement in Form eines Gelenkbolzens zusammengehalten. Der Gelenkbolzen wird bei der Montage durch eine Bohrung des Mittelstegs gepresst und bildet ein Gelenkteil, über das das Wischblatt mit einem Wischarm gelenkig verbunden werden kann.

Die u-förmigen Profile besitzen an ihrer Innenseite Schneiden, die durch Öffnungen im Träger in seitliche Kerben des Tragelements eingreifen und somit das Anschlusselement in Längsrichtung relativ zum Tragelement sichern. Im Bereich der Schneiden befinden sich Führungsblöcke, die das Tragelement senkrecht zu seinen Breitseiten führen.

Aus der US 2008/022 2829 A2 ist ein gattungsgemäßes Wischblatt bekannt, bei dem das Anschlusselement einen in Längsrichtung verlaufenden Mittelsteg hat, der in Längsrichtung senkrecht zum Wischleistenträger geteilt ist. Der Mittelsteg bildet ein Hohlprofil, an dessen Seitenwänden innen zueinander passende Vorsprünge und Muffen angeordnet sind, die die beiden Teile zusammenhalten. Seitlich vom Mittelsteg sind vorstehende Führungsprofile angeformt, die ein Tragelement in Form einer Stahlplatte halten. Auf der von den Führungsprofilen abgewandten Deckseite des Mittelstegs ist eine Lagerwalze angeformt, die quer zur Längsrichtung des Wischblatts verläuft und mit einer Lagerplatte eines Verbindungselements ein Schwenklager bildet. Das Verbindungselement kann an einem Wischarm befestigt werden.

### Offenbarung der Erfindung

Die Befestigungsmittel sind einander zugeordnete Rastnocken und Rastvertiefungen, die an den einander zugewandten Seiten der Teile des Mittelstegs vorgesehen sind. Durch die Rastnocken und Rastvertiefungen kann das Anschlusselement in einfacher Weise montiert werden, indem es mit seinen Führungsprofilen seitlich auf den Wischleistenträger aufgesetzt und im Bereich seines Mittelstegs zusammengeklippst wird. Dabei werden die Rastnocken, die ein kugeliges Oberflächenprofil haben können, in die entsprechenden Rastvertiefungen gedrückt, sodass sie sich nicht selbstständig wieder lösen können.

Es ist zweckmäßig, mehrere Paare von Rastnocken und Rastvertiefungen vorzusehen, die über die einander gegenüberliegenden Flächen der Teile verteilt sind. Die Rastnocken und Rastvertiefungen sind auf die Flächen so aufgeteilt und so angeordnet, dass die Teile des Anschlusselements gleich sind. Dadurch können sie nicht verwechselt oder falsch montiert werden.

Eine solche Gestaltung des Anschlusselements kann in einfacher Weise aus Kunststoff in einem Spritzgussverfahren hergestellt werden, wobei ein Lagerelement in Form einer Nabe oder zweier Lagerzapfen in das Anschlusselement integriert sein können. In vorteilhafter Weise ist das Lagerelement am Mittelsteg und an den Führungsprofilen angeformt. Die Anbindung an die Führungsprofile kann unmittelbar oder über eine oder mehrere Stützrippen erfolgen. Dadurch ergibt sich ein sehr formsteifes Anschlusselement, was für eine präzise Führung des Wischblatts und seine gute Wischqualität wichtig ist.

Nach der Erfindung halter u-förmige Klammern die Enden des Mittelstegs zusammen , indem sie die Teile des Mittelstegs von der Stirnseite umfassen. Die Klammem werden zweckmäßigerweise flach ausgebildet und in der Nähe der Führungsprofile angeordnet, sodass sie die Haltekräfte der Klammern gut auf die Führungsprofile übertragen. Dabei kann der Steg, der die beiden Schenkel der Klammer miteinander verbindet, in einem Querschlitz am Ende des Mittelstegs eingelassen sein. Dadurch wird der Anschluss von Spoilerteilen an das Anschlusselement erleichtert.

Die Schenkel der Klammer reichen zweckmäßigerweise bis in den Bereich eines Durchbruchs des Mittelstegs, an dessen Ränder sie mit Rasthaken verrasten können. Zur leichteren Montage ist es jedoch zweckmäßig, wenn die Schenkel keine über ihre Kontur nach außen vorstehenden Rasthaken aufweisen, sondern Ausbuchtungen, in die Rasthaken einrasten, die an der der Klammer gegenüberliegenden Seite des Durchbruchs angeformt sind. Dabei können die Ausbuchtungen an den äußeren oder inneren Längsseiten der Schenkel angebracht sein. Dies hat außerdem den Vorteil, dass die Klammern in Richtung der Lagerachse des Lagerelements eine große Haltekraft besitzen können, während die Rasthaken am Mittelsteg die Klammern in Längsrichtung des Wischblatts blockieren und mit geringer Kraft seitlich entriegelt werden können.

Zur Verstärkung des Anschlusselements sind an den Enden des Mittelstegs Stirnwände vorgesehen, die an den Mittelsteg anschließen und stirnseitig offene Aufnahmekammern für die Klammern haben. Die Aufnahmekammern bilden eine Erweiterung des Querschlitzes und sind zweckmäßigerweise so gestaltet, dass die Außenseiten der Schenkel mit geringem Spiel zu den Innenseiten der Aufnahmekammern angeordnet sind. Dadurch werden die Klammern in den Aufnahmekammern geführt und bei größeren Belastungen gegen Verformungen gesichert.

Nach einer weiteren Ausgestaltung der Erfindung stehen die Führungsprofile der Teile des Anschlusselements in Längsrichtung zu beiden Seiten über den Mittelsteg vor. Dabei ist an einem Ende an den Mittelsteg des ersten Teils ein Führungsblock angeformt, der den Mittelsteg des zweiten Teils in dem überstehenden Bereich des Führungsprofils in Längsrichtung ergänzt, ohne mit ihm verbunden zu sein, während die Länge des Führungsblocks des zweiten Teils den Mittelsteg des ersten Teils in dem überstehenden Bereich des Führungsprofils ergänzt.

Die Stärke der Führungsblöcke bestimmt eine kalibrierte Stärke des Mittelstegs. Sie kann sehr präzise hergestellt werden, weil sie nur durch eine Toleranz bestimmt wird und nicht durch zwei Toleranzen im übrigen Bereich des Mittelstegs, der aus zwei Teilen zusammengesetzt ist. Die Stärke der Führungsblöcke ist geringfügig größer als die Stärke des zusammengesetzten Mittelstegs, sodass die letztgenannte Stärke für die Kalibrierung keine Rolle spielt. Die Teile dieses Anschlusselements sind ebenfalls Gleichteile, sodass sich eine geringe Teilevielfalt ergibt, und eine Verwechslung bei der Montage ausgeschlossen ist.

Die Lage des Anschlusselements in Längsrichtung relativ zum Wischleistenträger wird durch Blockierungsrippen gesichert, die an der Innenseite mindestens eines Schenkels der Führungsprofile angeordnet sind und zweckmäßigerweise mit scharfen Kanten unter einer Vorspannung an der Gegenfläche des Wischleistenträgers anliegen. Durch die örtlich große Flächenpressung ergibt sich eine gute Haftung zwischen den Führungsprofilen und dem Wischleistenträger.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
Fig. 1 eine perspektivische Ansicht eines Wischleistenträgers mit einem Anschlusselement in Explosionsdarstellung,
Fig. 2 eine perspektivische Ansicht eines Wischleistenträgers mit einem Anschlusselement nach Fig. 1 in montierter Position,
Fig. 3 einen perspektivischen Schnitt entsprechend der Ebene III in Fig. 2,
Fig. 4 eine perspektivische Ansicht eines erfindungsgemäßen Wischblatts,
Fig. 5 eine Variante zu Fig. 2,
Fig. 6 eine Variante zu Fig. 4,
Fig. 7 ein Wischblatt nach 6 montiert an einem Verbindungselement zu einem Wischarm,
Fig. 8 eine Variante zu Fig. 1, die nicht im Rahmen der Erfindung liegt,
Fig. 9 eine perspektivische Ansicht einer Hälfte eines Anschlusselements nach Fig. 8 im vergrößerten Maßstab,
Fig. 10 eine Einzelheit entsprechend der Linie X in Fig. 9 und
Fig. 11 ein Anschlusselement nach Fig. 8 in montierter Position.

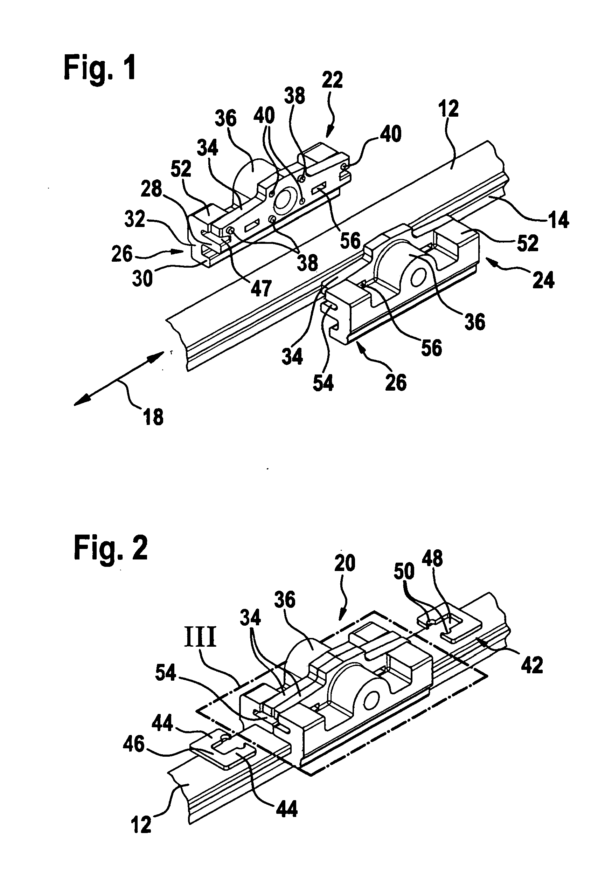

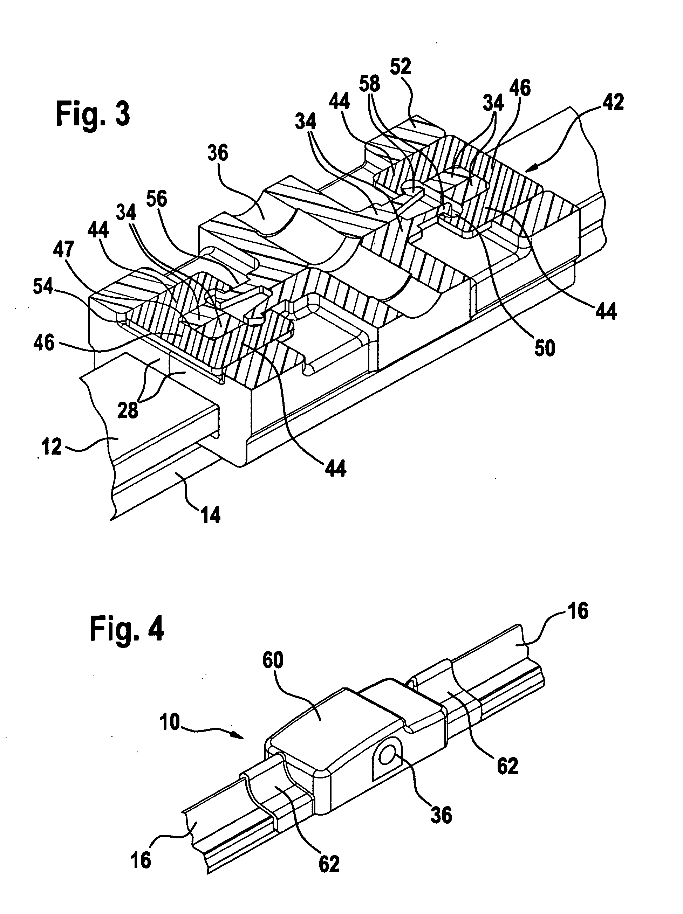

Von einem Wischblatt 10 (Fig. 4) ist in Fig. 1 ein Wischleistenträger 12 mit einer Wischleiste 14 sowie ein erstes Teil 22 und ein zweites Teil 24 eines Anschlusselements 20 dargestellt. Der Wischleistenträger 12 besitzt einen Längskanal, in dem ein nicht sichtbares Tragelement in Form einer Federschiene vorgesehen ist.

Jedes der Teile 22, 24 besitzt ein im Querschnitt u-förmiges Führungsprofil 26, das mit einem oberen Schenkel 28 und einem unteren Schenkel 30, die durch eine Seitenwand 32 miteinander verbunden sind, den Wischleistenträger 12 seitlich umfasst. Das Anschlusselement 20 weist einen in Längsrichtung 18 verlaufenden Mittelsteg 34 auf, mit dem die Führungsprofile 26 verbunden sind. Der Mittelsteg 34 ist in Längsrichtung 18 geteilt, sodass zwei gleiche Teile 22, 24 des Anschlusselements 20 entstehen. An den einander zugewandten Seiten der Teile 22, 24 des Mittelstegs 34 sind Rastnocken 38 angeordnet, die in Rastvertiefungen 40 des jeweils anderen Teils 22, 24 eingreifen. Die Rastnocken 38 und die Rastvertiefungen 40 sind an den einander zugewandten Seiten so verteilt und auf die Teile 22, 24 aufgeteilt, dass eine in allen Bereichen dauerhafte Klippverbindung entsteht. Gleichzeitig bleibt die Gleichheit der Teile 22, 24 erhalten, sodass eine Verwechslung bei der Montage ausgeschlossen ist.

Im mittleren Bereich des Anschlusselements 20 ist ein Lagerelement 36 in Form einer Nabe vorgesehen, die einerseits an dem Mittelsteg 34 und andererseits an dem oberen Schenkel 28 des Führungsprofils 26 angeformt ist.

Um den Zusammenhalt der beiden Teile 22, 24 zu verstärken, sind zwei flache, u-förmige Klammern 42 vorgesehen, die von den Stirnseiten oberhalb der oberen Schenkel 28 der Führungsprofile 26 in einen Querschlitz 47 des Mittelstegs 34 eingesetzt sind und die Mittelstege 34 der Teile 22, 24 in einem Zwischenraum 48 zwischen Schenkeln 44 zusammenhalten. Die Schenkel 44 der Klammer 42, die durch einen Steg 46 miteinander verbunden sind, reichen bis in den Bereich eines Durchbruchs 56 des Mittelstegs 34. In dem Durchbruch 56 sind an der der Klammer 42 gegenüberliegenden Seite Rasthaken 58 angeformt, die in montierter Position in Ausbuchtungen 50 an den zum Zwischenraum 48 weisenden Seiten der Schenkel 44 eingreifen. Die Rasthaken 58, die durch die Durchbrüche 56 quer zum Anschlusselement 20 elastisch entriegelt werden können, fixieren die Klammern 42 in Längsrichtung 18.

Stirnwände 52 verstärken das Anschlusselement 20 an seinen Enden, wobei sie sich an den oberen Schenkeln 28 der Führungsprofile 26 und seitlich an den Mittelsteg 34 der Teile 22, 24 anschließen. In den Stirnwänden 52 ist eine stirnseitig offene Aufnahmekammer 54 vorgesehen, die sich an den Querschlitz 47 anschließt und zur Aufnahme der Klammer 42 dient. Die inneren Wände des Aufnahmeraums 54 umfassen die Klammer 42 außen mit geringem Spiel, sodass sich diese selbst bei Auftreten großer Kräfte nicht lösen kann.

Nach der Montage des Anschlusselements 20 an den Wischleistenträger 12 werden Spoilerteile 16 auf den Wischleistenträger 12 geklippst oder von den Enden her aufgeschoben, bis sie an den Stirnseiten des Anschlusselements 20 anliegen. Hier ist es günstig, dass die Klammer 42 nicht über die Außenkontur des Anschlusselements 20 vorsteht. Darauf wird das Anschlusselement 20 durch eine Abdeckkappe 60 verkleidet, die mit Anschlussprofilen 62 die Spoilerteile 16 ein Stück weit überlappt.

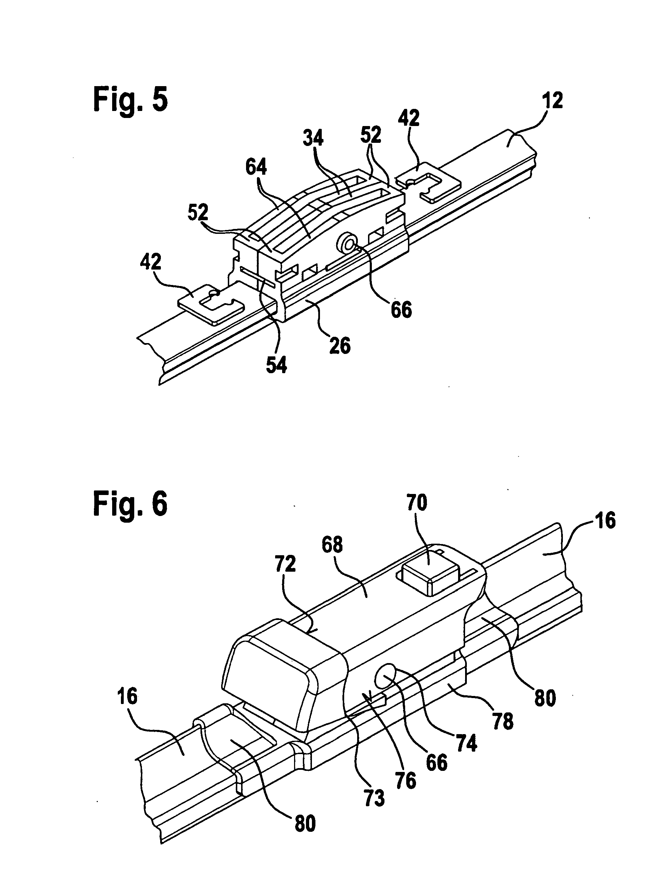

Bei dem Ausführungsbeispiel nach Fig. 5 bis Fig. 7 besitzt das Anschlusselement 20 Außenwände 64, die mit einem Abstand parallel zum Mittelsteg 34 verlaufen und durch die Stirnwände 52 mit dem Mittelsteg 34 verbunden sind. An den Außenseiten der Außenwände 64 ist als Lagerelement jeweils ein Lagerzapfen 66 angeformt, auf dem ein Adapter 68 mittels einer Nabe 74 gelagert ist.

Der Adapter 68 dient zum Anschluss eines Verbindungselements 82 eines nicht näher dargestellten Wischarms. Das Verbindungselement 82 wird bis zu einem Anschlag 72 in Längsrichtung 18 auf die Außenkontur des Adapters 68 geschoben, bis eine Federtaste 70 am anderen Ende des Adapters 68 in ein entsprechendes Rastloch 84 des Verbindungselements 82 einrastet. Dabei greift die Stirnseite des Verbindungselements 82 in eine Hinterschneidung 73 des Anschlags 72 des Adapters 68, sodass das Verbindungselement 82 durch den in Längsrichtung 18 wirkenden Anschlag 72, die Hinterschneidung 73 und einen in Längsrichtung 18 verlaufenden Anschlag 76 gehalten und durch die Federtaste 70 blockiert wird. Das Anschlusselement 20 nach Fig. 5 wird von einem Rahmen 78 seitlich umfasst, der stirnseitig mit Anschlussprofilen 80 verbunden ist. Diese überlappen die Spoilerteile 16.

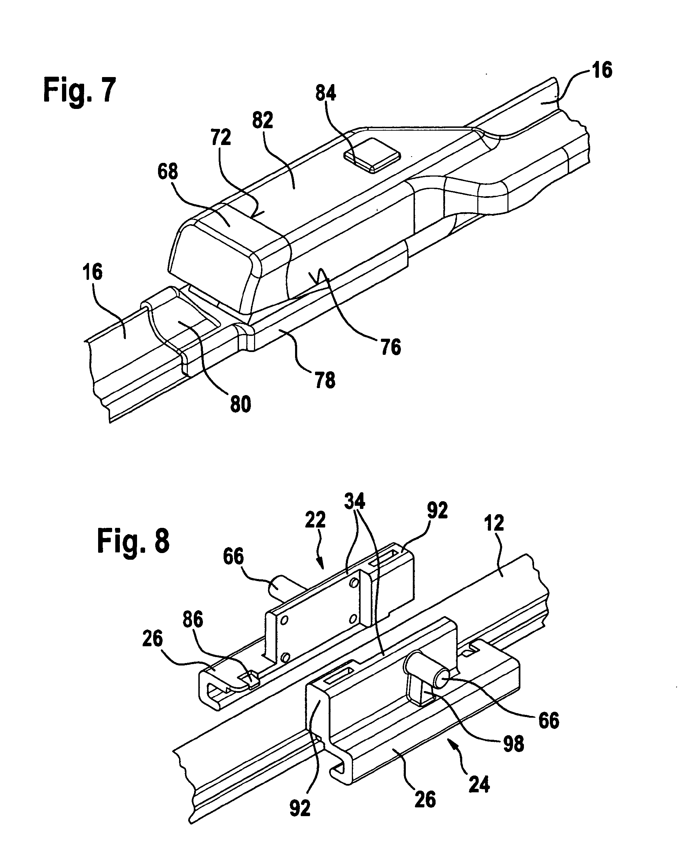

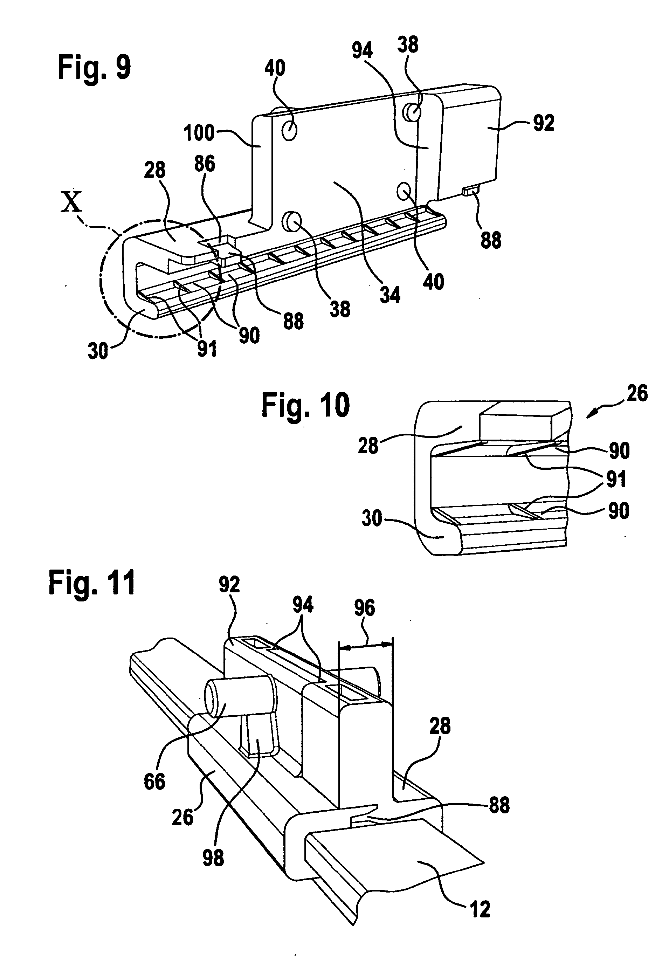

Das Ausführungsbeispiel nach Fig. 8 bis Fig. 10 besitzt an den Außenseiten des Mittelstegs 34 ebenfalls Lagerzapfen 66, die über Stützrippen 98 an die Führungsprofile 26 angeschlossen sind. Die Führungsprofile 26 stehen an ihren Enden ein Stück weit über den Mittelsteg 34 der Teile 22, 24 vor. An einem Ende schließt sich an den Mittelsteg 34 ein Führungsblock 92 an, der den Mittelsteg 34 im Bereich des überstehenden Teils des Führungsprofils ergänzt und quer zur Längsrichtung 18 des Wischblatts 10 in den Bereich des Mittelstegs 34 des jeweils anderen Teils 22, 24 reicht, sodass sich in montiertem Zustand über die gesamte Länge des Anschlusselements 20 ein Mittelsteg ergibt, der sich aus dem geteilten Mittelsteg 34 und den Führungsblöcken 92 zusammensetzt. Die Teile 22, 24 sind in Längsrichtung 18 des Wischblatts 10 und quer dazu durch Zentrierzungen 88 zentriert, die in entsprechende Vertiefungen 86 des jeweils anderen Teils 22, 24 eingreifen.

Die Führungsblöcke 92, die jeweils mit ihrem zum anderen Teil 22, 24 vorspringenden Teil in einem Bereich 94 an einer Stirnseite 100 des Mittelstegs 34 des jeweils anderen Teils 22, 24 anliegen, sind in ihrer Stärke geringfügig größer als die Stärke des zwischen ihnen liegenden Mittelstegs 34, der sich aus den zwei Teilen 22, 24 zusammensetzt. Dadurch können die Führungsblöcke 92 mit geringem Aufwand eine kalibrierte Stärke 96 erhalten, da sie nur aus einem Teil bestehen und daher nur eine Toleranz haben. Zur Fixierung des Anschlusselements 20 auf dem Wischleistenträger 12 in Längsrichtung 18 sind an den Innenseiten der Schenkel 28, 30 der Führungsprofile 26 Blockierrippen 90 mit quer verlaufenden Kanten 91 angeordnet, die unter Vorspannung am Wischleistenträger 12 anliegen.

## Patentansprüche

1. Anschlusselement (20) zum gelenkigen Verbinden eines Wischblatts (10) mit einem Wischarm, wobei das Anschlusselement (20) einen in Längsrichtung (18) verlaufenden Mittelsteg (34) hat, der in Längsrichtung (18) senkrecht zum Wischleistenträger (12) geteilt ist, und die Teile (22, 24) gleich und durch Befestigungsmittel (38, 40) in Form einander zugeordneter Rastnocken (38) und Rastvertiefungen (40) miteinander verbunden sind, die an den einander zugewandten Seiten der Teile (22, 24) des Mittelstegs (34) vorgesehen sind, **dadurch gekennzeichnet, dass** u-förmige Klammern (42) die Enden des Mittelstegs (34) zusammenhalten.

2. Anschlusselement (10) nach Anspruch 1, **dadurch gekennzeichnet, dass** der Mittelsteg (34) an seinen Enden einen Querschlitz (47) zur Aufnahme eines Stegs (46) besitzt, der die beiden Schenkel (44) der Klammer (42) miteinander verbindet.

3. Anschlusselement (10) nach Anspruch 1 oder 2, **dadurch gekennzeichnet, dass** die Schenkel (44) der Klammer (42) in den Bereich eines Durchbruchs (56) des Mittelstegs (34) reichen, wobei in dem Durchbruch (56) an der der Klammer (42) gegenüberliegenden Seite Rasthaken (58) angeformt sind, die im montierten Zustand in Ausbuchtungen (50) der Schenkel (44) einrasten.

4. Anschlusselement (10) nach einem der Ansprüche 1 bis 3, **dadurch gekennzeichnet, dass** an den Enden des Mittelstegs (34) Stirnwände (52) vorgesehen sind, die an den Mittelsteg (34) anschließen und stirnseitig offene Aufnahmekammern (54) für die Klammern (42) haben, wobei die Außenseiten der Schenkel (44) mit geringem Spiel zu den Innenseiten der Aufnahmekammer (54) angeordnet sind.

5. Wischblatt (10) mit einem Wischleistenträger (12) und einem Anschlusselement nach einem der Ansprüche 1 bis 4.

6. Wischblatt (10) nach Anspruch 5, **dadurch gekennzeichnet, dass** auf das Anschlusselement (20) eine Abdeckkappe (60) geklippst ist, die mit Anschlussprofilen (62) Spoilerteile (16) überdeckt, die auf dem Wischleistenträger (12) angebracht sind.

7. Wischblatt (10) nach einem der vorhergehenden Ansprüche 5 oder 6, **dadurch gekennzeichnet, dass** das Anschlusselement (20) parallel zum Mittelsteg (34), in Längsrichtung (18) Verlaufende Führungsprofile (26) besitzt, wobei ein Lagerelement in Form einer Nabe (36) oder zweier Lagerzapfen (66) an den Außenseiten des Mittelstegs (34) und an den Führungsprofilen (26) angeformt ist.

8. Wischblatt (10) nach einem der vorhergehenden Ansprüche 5-7, **dadurch gekennzeichnet, dass** das Anschlusselement (20) parallel zum Mittelsteg (34) verlaufende Außenwände (64) aufweist, die über die Stirnwände (52) mit dem Mittelsteg (34) verbunden sind und an ihren Außenseiten Lagerelemente in Form von Lagerzapfen (66) aufweisen.

9. Wischblatt (10) nach Anspruch 8, **dadurch gekennzeichnet, dass** zum Anschluss eines Verbindungselements (82) eines Wischarms auf den Lagerzapfen (66) ein Adapter (68) mit einer Nabe (74) schwenkbar gelagert ist, der an einem Ende einen Anschlag (72) mit einem Hinterschnitt (73) in Längsrichtung (18) und einen Anschlag (76) quer dazu besitzt, während er an seinem anderen Ende eine Federtaste (70) aufweist.

10. Wischblatt (10) nach Anspruch 8 oder 9, **dadurch gekennzeichnet, dass** die Führungsprofile (26) seitlich von einem Rahmen (78) umfasst sind, an die sich stirnseitig Anschlussprofile (80) anschließen, die mit dem Wischleistenträger (12) verbundene Spoilerteile (16) überlappen.

11. Wischblatt (10) nach Anspruch 5, **dadurch gekennzeichnet, dass** die Führungsprofile (26) der Teile (22, 24) des Anschlusselements (20) in Längsrichtung (18) zu beiden Seiten über den Mittelsteg (34) vorstehen, wobei an einem Ende an den Mittelsteg (34) des ersten Teils (22) ein Führungsblock (92) angeformt ist, der den Mittelsteg (34) des zweiten Teils (24) in dem überstehenden Bereich des Führungsprofils (26) in Längsrichtung (18) ergänzt, während die Länge des Führungsblocks (92) des zweiten Teils (24) den Mittelsteg (34) des ersten Teils (22) in dem entsprechenden überstehenden Bereich des Führungsprofils (26) ergänzt, und dass die Stärke der Führungsblöcke (92) eine kalibrierte Stärke (96) des Mittelstegs (34) bestimmt.

12. Wischblatt (10) nach Anspruch 11, **dadurch gekennzeichnet, dass** an der Innenseite mindestens eines der Schenkel (28, 30) der Führungsprofile (26) Blockierrippen (90) vorgesehen sind, die die Position des Anschlusselements (20) in Längsrichtung (18) relativ zum Wischleistenträger (12) sichern.

13. Wischblatt (10) nach einem der Ansprüche 11 oder 12, **dadurch gekennzeichnet, dass** an oberen Schenkeln (28) der Führungsprofile (26) des ersten und zweiten Teils (22, 24) des Anschlusselements (20) Zentrierzungen (88) vorgesehen sind, die in passende Vertiefungen (86) des jeweils anderen Teils (22, 24) eingreifen.

## Claims

1. Connection element (20) for the articulated connection of a wiper blade (10) to a wiper arm, wherein the connection element (20) has a central web (34) which runs in the longitudinal direction (18) and is divided in the longitudinal direction (18) perpendicularly to the wiper strip carrier (12), and the parts (22, 24) are identical and are connected to each other by fastening means (38, 40) in the form of mutually assigned latching cams (38) and latching depressions (40) which are provided on the mutually facing sides of the parts (22, 24) of the central web (34), **characterized in that** U-shaped clips (42) hold the ends of the central web (34) together.

2. Connection element (20) according to Claim 1, **characterized in that** the ends of the central web (34) have a transverse slot (47) for receiving a web (46) which connects the two limbs (44) of the clip (42) to each other.

3. Connection element (20) according to Claim 1 or 2, **characterized in that** the limbs (44) of the clip (42) reach into the region of an aperture (56) in the central web (34), wherein latching hooks (58) which, in the fitted state, latch into indentations (50) in the limbs (44) are integrally formed in the aperture (56) on the side opposite the clip (42).

4. Connection element (20) according to one of Claims 1 to 3, **characterized in that** end walls (52) are provided at the ends of the central web (34), said end walls adjoining the central web (34) and having receiving chambers (54), which are open on the end side, for the clips (42), wherein the outsides of the limbs (44) are arranged with little play with respect to the insides of the receiving chambers (54).

5. Wiper blade (10) with a wiper strip carrier (12) and a connection element according to one of Claims 1 to 4.

6. Wiper blade (10) according to Claim 5, **characterized in that** a covering cap (60) is clipped onto the connection element (20), said covering cap, by means of connection profiles (62), covering spoiler parts (16) which are mounted on the wiper strip carrier (12).

7. Wiper blade (10) according to either of the preceding Claims 5 and 6, **characterized in that** the connection element (20) has guide profiles (26) running in the longitudinal direction (18) parallel to the central web (34), wherein a bearing element in the form of a hub (36) or two pivots (66) is integrally formed on the outsides of the central web (34) and on the guide profiles (26).

8. Wiper blade (10) according to one of the preceding Claims 5-7, **characterized in that** the connection element (20) has outer walls (64) which run parallel to the central web (34), are connected to the central web (34) via the end walls (52) and, on the outsides thereof, have bearing elements in the form of pivots (66).

9. Wiper blade (10) according to Claim 8, **characterized in that**, in order to connect a joining element (82) of a wiper arm to the pivot (66), an adapter (68) with a hub (74) is mounted pivotably and, at one end, has a stop (72) with an undercut (73) in the longitudinal direction (18) and a stop (76) transversely with respect thereto, while the other end of the adapter has a spring button (70).

10. Wiper blade (10) according to Claim 8 or 9, **characterized in that** the guide profiles (26) are laterally enclosed by a frame (78) which is adjoined on the end sides by connection profiles (80) which overlap spoiler parts (16) connected to the wiper strip carrier (12).

11. Wiper blade (10) according to Claim 5 **characterized in that** the guide profiles (26) of the parts (22, 24) of the connection element (20) protrude in the longitudinal direction (18) over the central web (34) on both sides, wherein, at one end, a guide block (92) is integrally formed on the central web (34) of the first part (22), the guide block supplementing the central web (34) of the second part (24) in the protruding region of the guide profile (26) in the longitudinal direction (18), while the length of the guide block (92) of the second part (24) supplements the central web (34) of the first part (22) in the corresponding protruding region of the guide profile (26), and **in that** the thickness of the guide blocks (92) determines a calibrated thickness (96) of the central web (34).

12. Wiper blade (10) according to Claim 11, **characterized in that** blocking ribs (90) are provided on the inside of at least one of the limbs (28, 30) of the guide profiles (26), the blocking ribs securing the position of the connection element (20) in the longitudinal direction (18) relative to the wiper strip carrier (12).

13. Wiper blade (10) according to either of Claims 11 and 12, **characterized in that** centring tongues (88) are provided on upper limbs (28) of the guide profiles (26) of the first and second part (22, 24) of the connection element (20), said centring tongues engaging in matching depressions (86) in the other part (22, 24) in each case.

## Revendications

1. Elément de raccordement (20) pour la liaison articulée d'un balai d'essuie-glace (10) à un bras d'essuie-glace, l'élément de raccordement (20) présentant une nervure centrale (34) s'étendant dans la direction longitudinale (18), laquelle est divisée dans la direction longitudinale (18) perpendiculairement au support de raclette de balai d'essuie-glace (12), et les parties (22, 24) étant identiques et étant reliées les unes aux autres par des moyens de fixation (38, 40) en forme de cames d'encliquetage (38) et de renfoncements d'encliquetage (40) mutuellement associés, qui sont prévus sur les côtés en regard des parties (22, 24) de la nervure centrale (34), **caractérisé en ce que** des pinces en forme de U (42) retiennent ensemble les extrémités de la nervure centrale (34).

2. Elément de raccordement (20) selon la revendication 1, **caractérisé en ce que** la nervure centrale (34) possède, à ses extrémités, une fente transversale (47) pour recevoir une nervure (46) qui relie l'une à l'autre les deux branches (44) des pinces (42).

3. Elément de raccordement (20) selon la revendication 1 ou 2, **caractérisé en ce que** les branches (44) des pinces (42) s'étendent dans la région d'un orifice (56) de la nervure centrale (34), des crochets d'encliquetage (58) étant façonnés dans l'orifice (56) du côté opposé aux pinces (42), lesquels crochets d'encliquetage s'encliquètent dans l'état monté dans des creux (50) des branches (44).

4. Elément de raccordement (20) selon l'une quelconque des revendications 1 à 3, **caractérisé en ce que** des parois frontales (52) sont prévues aux extrémités de la nervure centrale (34), lesquelles se raccordent à la nervure centrale (34) et présentent des chambres de réception (54) pour les pinces (42), ouvertes du côté frontal, les côtés extérieurs des branches (44) étant disposés avec un faible jeu par rapport aux côtés intérieurs des chambres de réception (54).

5. Balai d'essuie-glace (10) comprenant un support de raclette de balai d'essuie-glace (12) et un élément de raccordement selon l'une quelconque des revendications 1 à 4.

6. Balai d'essuie-glace (10) selon la revendication 5, **caractérisé en ce qu'**un capuchon de recouvrement (60) est enclipsé sur l'élément de raccordement (20), lequel capuchon de recouvrement recouvre, avec des profilés de raccordement (62), des parties de déflecteur (16) qui sont montées sur le support de raclette de balai d'essuie-glace (12).

7. Balai d'essuie-glace (10) selon l'une quelconque des revendications précédentes 5 ou 6, **caractérisé en ce que** l'élément de raccordement (20) présente, parallèlement à la nervure centrale (34), des profilés de guidage (26) s'étendant dans la direction longitudinale (18), un élément de palier en forme de moyeu (36) ou de deux tourillons de palier (66) étant façonné sur les côtés extérieurs de la nervure centrale (34) et sur les profilés de guidage (26).

8. Balai d'essuie-glace (10) selon l'une quelconque des revendications précédentes 5 à 7, **caractérisé en ce que** l'élément de raccordement (20) présente des parois extérieures (64) s'étendant parallèlement à la nervure centrale (34), qui sont reliées à la nervure centrale (34) par le biais des parois frontales (52) et qui présentent, sur leurs côtés extérieurs, des éléments de palier en forme de tourillons de palier (66).

9. Balai d'essuie-glace (10) selon la revendication 8, **caractérisé en ce que** pour le raccordement d'un élément de liaison (82) d'un bras d'essuie-glace, un adaptateur (68) avec un moyeu (74) est monté de manière pivotante sur le tourillon de palier (66), l'adaptateur possédant à une extrémité une butée (72) avec une contre-dépouille (73) dans la direction longitudinale (18) et une butée (76) transversalement à celle-ci, tandis qu'il présente à son autre extrémité une touche à ressort (70).

10. Balai d'essuie-glace (10) selon la revendication 8 ou 9, **caractérisé en ce que** les profilés de guidage (26) sont entourés latéralement par un cadre (78) auquel se raccordent du côté frontal des profilés de raccordement (80), qui chevauchent des parties de déflecteur (16) reliées au support de raclette de balai d'essuie-glace (12).

11. Balai d'essuie-glace (10) selon la revendication 5, **caractérisé en ce que** les profilés de guidage (26) des parties (22, 24) de l'élément de raccordement (20) font saillie dans la direction longitudinale (18) des deux côtés au-delà de la nervure centrale (34), un bloc de guidage (92) étant façonné à une extrémité sur la nervure centrale (34) de la première partie (22), lequel complète la nervure centrale (34) de la deuxième partie (24) dans la région en saillie du profilé de guidage (26) dans la direction longitudinale (18), tandis que la longueur du bloc de guidage (92) de la deuxième partie (24) complète la nervure centrale (34) de la première partie (22) dans la région en saillie correspondante du profilé de guidage (26), et **en ce que** l'épaisseur des blocs de guidage (92) détermine une épaisseur calibrée (96) de la nervure centrale (34).

12. Balai d'essuie-glace (10) selon la revendication 11, **caractérisé en ce que** sur le côté intérieur d'au moins l'une des branches (28, 30) des profilés de guidage (26) sont prévues des nervures de blocage (90) qui fixent la position de l'élément de raccordement (20) dans la direction longitudinale (18) par rapport au support de raclette de balai d'essuie-glace (12).

13. Balai d'essuie-glace (10) selon l'une quelconque des revendications 11 ou 12, **caractérisé en ce que** sur des branches supérieures (28) des profilés de guidage (26) de la première et de la deuxième partie (22, 24) de l'élément de raccordement (20) sont prévues des langues de centrage (88) qui viennent en prise dans des renfoncements adaptés (86) de l'autre partie respective (22, 24).
